# EUROPÄISCHE PATENTSCHRIFT

(11) **EP 4 609 493 B1**
(45) Veröffentlichungstag und Bekanntmachung des Hinweises auf die Patenterteilung: **24.12.2025**
(21) Anmeldenummer: 23782452.9
(22) Anmeldetag: 26.09.2023
(51) Int. Cl.: H02K 15/12

(54) **VERFAHREN ZUM IMPRÄGNIEREN WENIGSTENS EINER DRAHTWICKLUNG EINES BAUTEILS**
METHOD FOR IMPREGNATING AT LEAST ONE WIRE WINDING OF A COMPONENT
PROCÉDÉ D'IMPRÉGNATION D'AU MOINS UN ENROULEMENT DE FIL D'UN COMPOSANT

(30) Priorität: 27.10.2022 DE 102022128506
(43) Veröffentlichungstag der Anmeldung: 03.09.2025
(73) Patentinhaber: AUDI AG, 85057 Ingolstadt (DE)
(72) Erfinder: BIER, Alexander, 85080 Gaimersheim (DE); GERNGROSS, Martin, 85125 Kinding (DE); STENZEL, Peer, 85051 Ingolstadt (DE)
(86) Internationale Anmeldenummer: PCT/EP2023/076543
(87) Internationale Veröffentlichungsnummer: WO 2024/088677

(56) Entgegenhaltungen:
- EP-A1- 4 068 596
- EP-B1- 2 710 708
- WO-A1-2022/018336
- WO-A1-2022/128632
- AT-B- 402 243
- DE-A1- 1 538 918
- DE-A1- 102020 123 852
- DE-B3- 102021 001 874
- JP-A- S5 713 951
- JP-B2- 3 618 956
- JP-B2- 4 900 279
- JP-B2- 6 255 734
- US-A1- 2022 094 248

## Beschreibung

Die Erfindung betrifft ein Verfahren zum Imprägnieren wenigstens einer Drahtwicklung eines Bauteils.

Wicklungen in Statoren oder Rotoren elektrischer Maschinen werden üblicherweise imprägniert. Dies dient primär der mechanischen Fixierung der Wicklungen, erfüllt aber darüber hinaus weitere Aufgaben, wie die Erhöhung des elektrischen Isolationsvermögens der Wicklungen, die Verbesserung der Wärmeabfuhr (Abfuhr der Verlustleistung der Wicklungen) oder der Verbesserung des Schutzes vor Umwelteinflüssen (Luftfeuchtigkeit, Öl, etc.). Diesen sekundären Aufgaben kommt insbesondere bei automobilen Traktionsantrieben eine große Bedeutung zu, um schlussendlich die Kosten für die Antriebe zu senken. Aus der Vielzahl von bekannten Verfahren werden bei automobilen Traktionsantrieben insbesondere das Träufelverfahren, das Heißtauchverfahren sowie das Rolltauchen verwendet. Weitere Verfahren sind beispielsweise das Vakuum-(VI)-Verfahren, das Vakuumdruck-(VPI)-Verfahren und das atmosphärische Tauchverfahren (dip & bake). Die gängigen Verfahren haben jeweils spezifische Vor- und Nachteile.

Die DE 15 38 918 A1 offenbart ein Verfahren zum Imprägnieren von Wicklungen eines Maschinenteils, wobei bei dem Verfahren auf das senkrecht stehende Maschinenteil ein Trichter zum Einleiten eines Imprägniermittels in die Wicklungen aufgesetzt wird.

Die WO 2022 / 128 632 A1 offenbart ein Verfahren zum Imprägnieren von Wicklungen eines Rotors, wobei bei dem Verfahren der Rotor vertikal steht und das Imprägniermittel von einem oberen Ende des Rotors auf die Wicklungen aufgetragen wird. Ein unteres Ende des Rotors wird dabei mittels einer Abdeckung verschlossen. Das sich an dem unteren Ende sammelnde Imprägniermaterial wird anschließend zum Verschließen des unteren Endes ausgehärtet. Durch weiteres Auftragen von Imprägniermaterial werden die Wicklungen zu dem oberen Ende hin imprägniert.

Die WO 2022 / 018 336 A1 offenbart ein Verfahren zum Imprägnieren eines Stators, wobei bei zwei Temperaturen des Stators ein Imprägniermittel auf denselben aufgetragen wird.

Die US 2022 / 094 248 A1 offenbart ein Verfahren zum Imprägnieren eines Stators, bei dem auf den vertikal stehenden Stator an einem oberen Ende des Stators ein Imprägniermittel aufgetragen wird und ein unteres Ende erwärmt wird, sodass dieses durch das nach unten fließende Imprägniermittel verschlossen wird.

Die Erfindung hat sich zur Aufgabe gestellt, ein alternatives oder verbessertes Imprägnierverfahren zu schaffen.

Zum Lösen dieser Aufgabe schafft die Erfindung ein Verfahren zum Imprägnieren wenigstens eines Drahtwicklung eines Bauteils gemäß Anspruch 1.

Vorteilhafte Ausgestaltungen sind Gegenstand der Unteransprüche.

Die Erfindung schafft ein Verfahren zum Imprägnieren wenigstens einer Drahtwicklung eines Bauteils, insbesondere eines Stators oder eines Rotors für einen Elektromotor, wobei die wenigstens eine Drahtwicklung an wenigstens einer Stirnseite von gegenüberliegenden Stirnseiten des Bauteils (wenigstens) einen Wickelkopf aufweist und sich in einem Zwischenbereich zwischen den Stirnseiten entlang einer Erstreckungsrichtung des Bauteils erstreckt, das Verfahren umfassend die Schritte:
a) Erwärmen, vorzugsweise homogenes Erwärmen, des Bauteils;
b) Ausrichten des Bauteils derart, dass die Erstreckungsrichtung im Wesentlichen vertikal oder senkrecht verläuft und der (wenigstens eine) Wickelkopf an der vertikal oberen Stirnseite angeordnet ist;
c) Auftragen eines flüssigen und/oder unter Erwärmung zerfließenden, verfestigbaren Imprägniermaterials auf wenigstens einen ersten Bauteilbereich des Bauteils an der vertikal oberen Stirnseite zum Einleiten des Imprägniermaterials in zumindest einen Bereich des Wickelkopfs derart, dass das Imprägniermaterial schwerkraft- und/oder kapillarkraftbedingt von dem Wickelkopf durch den Zwischenbereich hindurch (also entlang der Nut) zu der vertikal unteren Stirnseite fließt; und
d) Verfestigen des Imprägniermaterials, wobei Schritt c) umfasst:
   c5) Erfassen einer Auftragmenge des Imprägniermaterials, das auf den ersten Bauteilbereich aufgetragen wird, und Erfassen einer Abtropfmenge des Imprägniermaterials, das an der vertikal unteren Stirnseite des Bauteils abtropft;
   c6) Bestimmen eines Imprägnierungsgrads der Imprägnierung der wenigstens einen Drahtwicklung durch Vergleichen von Auftragmenge und Abtropfmenge; und
   c7) Regeln und/oder Dosieren einer Auftragmenge des Imprägniermaterials auf Grundlage des Imprägnierungsgrads.

Ein Vorteil des erfindungsgemäßen Verfahrens kann sein, dass außenliegende Bereiche des Bauteils nicht mit Imprägniermaterial überzogen werden. Mit dem erfindungsgemäßen Verfahren kann die Imprägnierung auf die Drahtwicklung begrenzt werden. Andere Bereiche, die nicht mit Imprägniermaterial überzogen werden sollen, können freigehalten werden.

Handelt es sich beispielsweise bei dem Bauteil um einen Rotor, so können die außenliegenden Bereiche eines Blechpakets des Rotors frei von Imprägniermaterial gehalten werden. Weist der Rotor zusätzlich Kühlkanäle zum Kühlen des Rotors auf, so können die Kühlkanäle frei von Imprägniermaterial gehalten werden.

Hierdurch kann auf eine aufwändige Nachbearbeitung des Bauteils zur Entfernung von Imprägniermaterials verzichtet werden. Der Imprägnierprozess wird somit deutlich vereinfacht.

Weiterhin erfolgt der Eintrag von Imprägniermaterial lediglich von der vertikal oberen Stirnseite des Bauteils und somit nur von einer Richtung. Eine Fließrichtung des Imprägniermaterials ist parallel zu der Erstreckungsrichtung der Drähte der Drahtwicklung des Bauteils angeordnet, d.h. senkrecht nach unten und damit zumindest teilweise schwerkraftgetrieben. Die in der Drahtwicklung befindliche Luft kann zur vertikal unteren Stirnseite entweichen. Damit kann das Auftreten von Lufteinschlüssen reduziert werden.

Ein Vorteil der Erfindung kann sein, dass die Auftragmenge und die Abtropfmenge des Imprägniermaterials erfasst werden können. Dadurch kann das Imprägnierverfahren zusätzlich optimiert und die Qualität der Imprägnierung laufend überprüft werden. Durch Regeln der Auftragmenge kann die Drahtwicklung fortwährend mit Imprägniermaterial überzogen werden, ohne dass freizuhaltende Bereiche mit Imprägniermaterial überzogen werden.

Es ist bevorzugt, dass Schritt d) einen, mehrere oder alle der folgenden Schritte umfasst:
d1) Gelieren des Imprägniermaterials auf der wenigstens einen Drahtwicklung;
d2) Gelieren des Imprägniermaterials durch Wärmebehandlung des Bauteils, vorzugsweise mittels Bestromung der wenigstens einen Drahtwicklung, Infrarotstrahlung, Konvektionsluft und/oder Induktion;
d3) Gelieren des Imprägniermaterials zum Unterbinden des Fließens des Imprägniermaterials; und
d4) Gelieren des Imprägniermaterials in wenigstens einem unteren Wicklungsbereich der wenigstens einen Drahtwicklung und hierdurch Erzeugen eines Rückstaus von Imprägniermaterial an einem darüber angeordneten Wicklungsbereich; und
d5) Sukzessives Gelieren des Imprägniermaterials in einer Mehrzahl von Wicklungsbereichen.

Ein Vorteil der Erfindung kann sein, dass beispielsweise gleichzeitig zum Auftragen des Imprägniermaterials auf den ersten Bauteilbereich ein Gelieren des Imprägniermaterials in der Drahtwicklung erfolgen kann. So kann die Drahtwicklung sukzessiv mit Imprägniermaterial überzogen oder gefüllt werden und/oder es kann mittels eines gelierten Teils des Imprägniermaterials ein Rückstau an flüssigem Imprägniermaterial in der Drahtwicklung bewirkt werden, wodurch eine Menge von in der Drahtwicklung gehaltenen Imprägniermaterial gesteigert werden kann. Darüber hinaus kann die Drahtwicklung mit einer größeren Menge von Imprägniermaterial überzogen werden als es möglich wäre, wenn die Erwärmung über das gesamte Bauteil zugleich erfolgen müsste. Ein Füllgrad an Imprägniermaterial in der Drahtwicklung wird erhöht.

Das Gelieren kann durch Wärmebehandlung des Bauteils eingeleitet werden. Dabei kann das Gelieren auch zunächst begrenzt auf einen Wicklungsbereich der Drahtwicklung eingeleitet werden. Das Gelieren des Imprägniermaterial muss somit nicht auf der gesamten Drahtwicklung gleichzeitig eingeleitet werden, sondern kann lokal auf den Wicklungsbereich begrenzt eingeleitet werden.

Beispielsweise kann sich ein erster Wicklungsbereich in einem unteren Bereich des Bauteils befinden. So kann zunächst das Imprägniermaterial in dem ersten Wicklungsbereich geliert und anschließend die Drahtwicklung in Richtung der vertikal oberen Stirnseite weiter mit Imprägniermaterial überzogen und/oder befüllt werden.

Anschließend kann das Gelieren in einem zweiten Wicklungsbereich, der beispielsweise vertikal über dem ersten Wicklungsbereich angeordnet ist, eingeleitet werden.

Es ist bevorzugt, dass Schritt d) einen oder beide der folgenden Schritte umfasst:
d6) Aushärten des Imprägniermaterials auf der wenigstens einen Drahtwicklung, und
d7) Aushärten des Imprägniermaterials durch Wärmebehandlung des Bauteils.

Das Aushärten wird vorzugsweise unter Wärmebehandlung des Bauteils durchgeführt. Die Wärmebehandlung kann extern erfolgen. Beispielsweise kann das Bauteil in einem Ofen erwärmt oder erhitzt werden. Dabei wird das Bauteil auf einer Temperatur gehalten, die gemäß Spezifikation des Imprägniermaterials zum Verfestigen und/oder Aushärten erforderlich ist.

Es ist bevorzugt, dass ein, mehrere oder alle Schritte des Verfahrens unter Bestromung der wenigstens einen Drahtwicklung und/oder unter Vakuum erfolgt bzw. erfolgen.

Die Verflüssigung des Imprägniermaterials kann durch das erwärmte Bauteil erfolgen. Vorzugsweise wird die Verflüssigung durch die Bestromung der Drahtwicklung unterstützt. Durch Bestromung der Drahtwicklung lässt sich außerdem auch das vorgewärmte Bauteil warm halten. Wenn das Auftragen des Imprägniermaterials unter Vakuum durchgeführt wird, kann das Auftreten von Lufteinschlüssen nach dem Aushärten weiter reduziert werden.

Zusätzlich oder alternativ zur externen Wärmebehandlung des Bauteils kann das Gelieren auch unter Bestromung der wenigstens einen Drahtwicklung durchgeführt werden, also durch inneres Heizen.

Zusätzlich oder alternativ zur Wärmebehandlung des Bauteils kann das Aushärten unter Bestromung der wenigstens einen Drahtwicklung durchgeführt werden.

Wenn das Gelieren unter Vakuum durchgeführt wird, kann das Auftreten von Lufteinschlüssen nach dem Aushärten weiter reduziert werden.

Es ist bevorzugt, dass Schritt c) einen oder beide der folgenden Schritte umfasst:
c1) Auftragen eines Imprägniermaterials, dessen Viskosität sich durch Erwärmung des Imprägniermaterials verringert; und
c2) Auftragen eines Imprägnierharzes, vorzugsweise eines Epoxidharzes und/oder eines Polyesterharzes.

Ein Vorteil des Verfahrens kann sein, dass ein Imprägniermaterial verwendet werden kann, das beispielsweise bei Raumtemperatur eine hohe Viskosität aufweist, dessen Viskosität sich aber durch Erwärmung verringert. So kann das Imprägniermaterial in beispielsweise dickflüssiger oder gar fester Form noch gezielter auf den Wickelkopf aufgetragen werden. Andere Bereiche können frei von Imprägniermaterial gehalten werden. Durch das in Schritt a) erwärmte Bauteil wird das Imprägniermaterial dünnflüssig, sodass sich das Imprägniermaterial genau in den gewünschten Bereich verteilt. Damit kann ein Überziehen des Bauteils mit Imprägniermaterial in unerwünschten Bereichen vermieden werden, wodurch eine aufwändige Nachbearbeitung entfallen kann.

Es ist bevorzugt, dass an der vertikal oberen Stirnseite im Vergleich zu der vertikal unteren Stirnseite des Bauteils ein Überdruck und/oder an der vertikal unteren Stirnseite im Vergleich zu der vertikal oberen Stirnseite des Bauteils ein Unterdruck zum Auftragen des Imprägniermaterials erzeugt wird.

Zur Verbesserung der Verteilung des Imprägniermaterials in der Fließrichtung von vertikal oben nach vertikal unten, kann an der vertikal oberen Stirnseite des Bauteils ein Überdruck und/oder an der vertikal unteren Stirnseite des Bauteils ein Unterdruck erzeugt werden. Hierdurch kann die Verteilung des Imprägniermaterials und das Imprägnierverfahren im Allgemeinen beschleunigt werden.

Es ist bevorzugt, dass vor dem Auftragen einer, mehrere oder alle der folgenden Schritte durchgeführt werden:
f1) Abdichten und/oder Abdecken wenigstens eines zweiten Bauteilbereichs des Bauteils, der nicht mit Imprägniermaterial überzogen werden soll;
f2) Abdichten und/oder Abdecken eines zweiten Bauteilbereichs an der vertikal oberen Stirnseite derart, dass bei Auftragen von Imprägniermaterial auf den wenigstens einen ersten Bauteilbereich das Imprägniermaterial ausschließlich von dem Wickelkopf über die wenigstens eine Drahtwicklung, insbesondere den Zwischenbereich, in Richtung der vertikal unteren Stirnseite fließt; und
f3) Bilden eines Reservoirs an der vertikal oberen Stirnseite zum Fluten des Wickelkopfs mit Imprägniermaterial.

Es ist bevorzugt, dass das Verfahren umfasst:
f4) Fluten zumindest eines Teils des Wickelkopfs mit Imprägniermaterial durch Befüllen des Reservoirs mit Imprägniermaterial.

Es ist bevorzugt, dass das Verfahren umfasst:
f5) Vermeiden eines Auftragens des Imprägniermaterials auf den wenigstens einen zweiten Bauteilbereich, der nicht mit Imprägniermaterial überzogen werden soll.

Ein Vorteil der Erfindung kann sein, dass zweite Bauteilbereiche nicht mit Imprägniermaterial überzogen werden. Diese zweiten Bauteilbereiche können vor dem Auftragen zusätzlich abgedichtet und/oder abgedeckt werden. Andere Bereiche, wie beispielsweise außenliegende Bereiche des Bauteils, müssen nicht abgedichtet und/oder abgedeckt werden, weil dort das Imprägniermaterial ohnehin nicht hingelangen kann. So kann durch Abdichten und/oder Abdecken beispielsweise von zweiten Bauteilbereichen an der vertikal oberen Stirnseite das Imprägniermaterial gezielt verteilt werden und das Bauteil vor Verschmutzung durch Imprägniermaterial geschützt werden. Durch das Abdichten und/oder Abdecken kann zusätzlich vermieden werden, dass sich während des Gelierens und Aushärtens unerwünschte Aerosole oder Spritzer aus dem Imprägniermaterial auf den frei zu haltenden Bereich absetzen.

Eine Möglichkeit der Erfindung ist es auch, die vertikal obere Stirnseite des Bauteils derart auszubilden, dass dort ein Reservoir zum Fluten des Wickelkopfs mit Imprägniermaterial gebildet wird. Dies erfordert nur eine geringfügige Weiterbildung der vertikal oberen Stirnseite des Bauteils.

Es ist bevorzugt, dass Schritt c) einen oder beide der folgenden Schritte umfasst:
c3) Auftragen einer dosierten Auftragmenge des Imprägniermaterials; und
c4) Ausspülen von Lufteinschlüssen in der wenigstens einen Drahtwicklung durch überschüssiges und/oder kontinuierliches Auftragen von Imprägniermaterial.

Bei dem erfindungsgemäßen Verfahren kann die Auftragmenge des Imprägniermaterials festgelegt werden. Somit kann ein Imprägnierungsgrad der Imprägnierung der Drahtwicklung bestimmt und/oder eingestellt werden, indem ein darüber hinausgehender Überschuss gar nicht erst in des Bauteil eingeleitet wird. Außerdem kann das Verfahren hinsichtlich Verbrauch von Imprägniermaterial optimiert werden.

Die für einen bestimmten Imprägnierungsgrad erforderliche Auftragmenge kann empirisch bestimmt werden. Das Ausspülen und/oder Verdrängen von Lufteinschlüssen kann ferner durch empirisch bestimmte Prozessparameter, beispielsweise eine Auftraggeschwindigkeit, eine Position des Auftragens und/oder eine zeitliche Abhängigkeit des Auftragens des Imprägniermaterials optimiert werden. Alternativ oder zusätzlich können durch kontinuierliches Auftragen des Imprägniermaterials Lufteinschlüsse ausgespült und/oder verdrängt werden, was die Qualität der Imprägnierung erhöht.

Vorzugsweise wird ein kontinuierlicher Strom von Imprägniermaterial über und/oder durch die Drahtwicklung gebildet.

Es ist bevorzugt, dass Schritt c) ferner umfasst:
c8) Bestimmen des Imprägnierungsgrads durch Erfassen einer elektrischen Kapazität der wenigstens einen Drahtwicklung mittels einer Messschaltung.

Es ist bevorzugt, dass Schritt c) ferner umfasst:
c9) Regeln und/oder Dosieren der Auftragmenge des Imprägniermaterials derart, dass sie in etwa der Abtropfmenge entspricht.

Es ist bevorzugt, dass das Verfahren ferner die Schritte umfasst:
g1) Auffangen von Imprägniermaterial, das an der vertikal unteren Stirnseite abtropft; und
g2) Rückführen des aufgefangenen Imprägniermaterials zum erneuten Auftragen auf den Wickelkopf.

Durch Auffangen von Imprägniermaterial und Rückführen lässt sich ein Kreislauf von Imprägniermaterial durch die Drahtwicklung bilden. Hierdurch werden der Verbrauch von Imprägniermaterial verringert und Kosten eingespart.

Das erfindungsgemäße Verfahren betrifft ein Bauteil, insbesondere einen Stator oder einen Rotor für einen Elektromotor, mit wenigstens einer Drahtwicklung, die an wenigstens einer Stirnseite von gegenüberliegenden Stirnseiten des Bauteils einen Wickelkopf aufweist und in einem Zwischenbereich zwischen den Stirnseiten entlang einer Erstreckungsrichtung des Bauteils verläuft, wobei die wenigstens eine Drahtwicklung eine Imprägnierung aufweist, die durch das Verfahren nach einem der vorhergehenden Ausgestaltungen hergestellt und/oder erhältlich ist.

Es ist bevorzugt, dass die wenigstens eine Drahtwicklung in dem gesamten Bereich zwischen den Stirnseiten lufteinschlussfrei und/oder homogen mit Imprägniermaterial ausgefüllt ist.

Es ist bevorzugt, dass das Bauteil als Rotor für einen Elektromotor ausgebildet ist, wobei der Rotor eine Mehrzahl von Kühlkanälen zum Kühlen des Rotors umfasst, wobei die Kühlkanäle zumindest abschnittsweise axial (parallel zur vorgesehenen Rotationsachse) durch den Rotor verlaufen und an der wenigstens einen den Wickelkopf aufweisenden Stirnseite in einem Bauteilbereich austreten, auf dem bei dem Verfahren nach einer der vorhergehenden Ausgestaltungen kein Imprägniermaterial aufgetragen wird, wobei die Kühlkanäle frei von Imprägniermaterial sind.

Indem die axialen Abschnitte der Kühlkanäle während des Befüllens der Drahtwicklungen mit dem Imprägniermaterial sowie parallel dazu die Drähte der Drahtwicklung senkrecht ausgerichtet sind und das Imprägniermaterial von der Schwerkraft gezogen zwischen den Drähten senkrecht nach unten träufelt oder läuft, ist in dem Imprägniermaterial ein Druck quer hin zu den Kühlkanälen vermieden, der das Imprägniermaterial durch Spalte hindurch in die Kühlkanäle treiben könnte, was die Kühlkanäle frei von Imprägniermaterial hält.

Lediglich eine Kapillarwirkung oder ein Staudruck könnte das Imprägniermaterial durch die Spalte in die Kühlkanäle treiben. Um auch dem entgegenzuwirken, kann ein jeweiliger Dichtungsring oder eine jeweilige Dichtungsscheibe vorgesehen werden, um Spalte, die sich bezüglich der Rotationsachse des Rotors radial erstrecken, zu schließen, wie sie zwischen Eisenblechen eines Blechpakets des Rotors und/oder zwischen dem Blechpaket und der Sternscheibe ansonsten vorhanden sein könnten.

Auch ist somit ein seitliches Austreten des Imprägniermaterials auf eine Mantelfläche des Rotors vermieden. Dies hält den äußersten Umfang des Rotors frei von Imprägniermaterial, was eine Nacharbeit erspart und einen Luftspalt einer elektrischen Maschine präzise fertigen lässt.

Es ist bevorzugt, dass das Bauteil als Rotor für einen Elektromotor ausgebildet ist, wobei die wenigstens eine Drahtwicklung um wenigstens einen Zahn des Rotors gewickelt ist und der Rotor vorzugsweise an den Stirnseiten jeweils einen Wickelkopf aufweist.

Es ist bevorzugt, dass das Bauteil eine Mehrzahl von Drahtwicklungen und Zähnen aufweist, wobei die Drahtwicklungen eine konzentrierte Wicklung um die Zähne bilden.

Gemäß einem weiteren Aspekt schafft die Erfindung einen Elektromotor mit dem Bauteil nach einer der vorhergehenden Ausgestaltungen.

Die Erfindung umfasst auch die Kombinationen der Merkmale der beschriebenen Ausführungsformen. Die Erfindung umfasst also auch Realisierungen, die jeweils eine Kombination der Merkmale mehrerer der beschriebenen Ausführungsformen aufweisen, sofern die Ausführungsformen nicht als sich gegenseitig ausschließend beschrieben wurden.

Im Folgenden sind Ausführungsbeispiele der Erfindung beschrieben. Hierzu zeigt:
- Fig. 1: ein Bauteil, das exemplarisch als ein Rotor für einen Elektromotor ausgebildet ist;
- Fig. 2: einen Schnitt des Rotors in einer Draufsicht;
- Fig. 3: eine Anordnung eines Drahts in einer Drahtwicklung des Rotors;
- Fig. 4: einen Schnitt des Rotors in einer Seitenansicht;
- Fig. 5: eine Ausführungsform eines Verfahrens zum Imprägnieren der Drahtwicklungen des Rotors;
- Fig. 6: eine Anordnung zum Auftragen eines Imprägniermaterials;
- Fig. 7: die Anordnung von Fig. 6 in einer Draufsicht;
- Fig. 8: eine Fließrichtung des Imprägniermaterials;
- Fig. 9: weitere Ausführungsformen eines Schrittes des Verfahrens nach Fig. 5;
- Fig. 10: eine Anordnung zum Rückführen des Imprägniermaterials;
- Fig. 11: Ausführungsformen eines Schrittes des Verfahrens zum Imprägnieren der Drahtwicklungen;
- Fig. 12: eine weitere Anordnung zum Auftragen des Imprägniermaterials;
- Fig. 13: einen Schnitt des Rotors in einer weiteren Seitenansicht, wobei die Drahtwicklungen nach einem bekannten Verfahren imprägniert werden;
- Fig. 14: einen Schnitt des Rotors von Fig. 13 in einer Draufsicht, wobei der Schnitt mit UV-Licht beleuchtet ist;
- Fig. 15: Lufteinschlüsse, die bei bekannten Verfahren entstehen;
- Fig. 16: einen Schnitt des Rotors in einer weiteren Seitenansicht, wobei die Drahtwicklungen nach dem Verfahren imprägniert werden; und
- Fig. 17: einen Schnitt des Rotors von Fig. 16 in einer Draufsicht, wobei der Schnitt mit UV-Licht beleuchtet ist.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden. Daher soll die Offenbarung auch andere als die dargestellten Kombinationen der Merkmale der Ausführungsformen umfassen. Des Weiteren sind die beschriebenen Ausführungsformen auch durch weitere der bereits beschriebenen Merkmale der Erfindung ergänzbar.

In den Figuren bezeichnen gleiche Bezugszeichen jeweils funktionsgleiche Elemente.

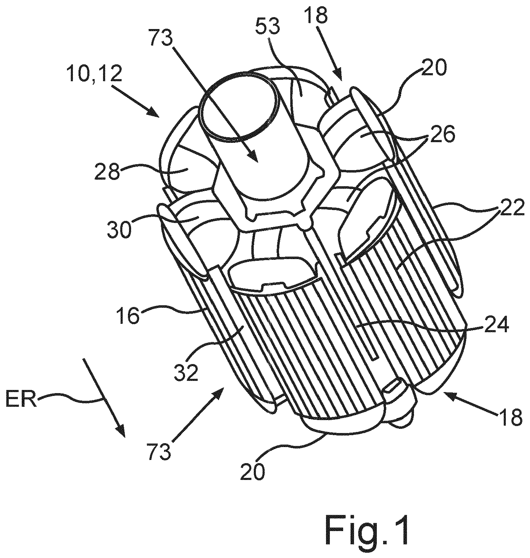

Fig. 1 zeigt ein Bauteil 10, das exemplarisch als ein Rotor 12 für einen Elektromotor ausgebildet ist.

Der Rotor 12 weist ein im Umriss annähernd zylinderförmiges Blechpaket 16 aus einer Mehrzahl von Blechen auf, die entlang einer Erstreckungsrichtung ER des Rotors 12 aneinandergereiht sind. An gegenüberliegenden Stirnseiten 18 des Blechpakets 16 ist jeweils eine Sternscheibe 20 angeordnet.

Das Blechpaket 16 und die Sternscheiben 20 sind derart ausgebildet, dass der Rotor 12 wenigstens einen Zahn 22 aufweist. Der in Fig. 1 gezeigte Rotor 12 weist sechs Zähne 22 auf. Zwischen zwei Zähnen 22 ist jeweils eine Nut 24 angeordnet.

Der Rotor 12 weist ferner wenigstens eine Drahtwicklung 26 auf. In dem Beispiel von Fig. 1 weist der Rotor 12 sechs Drahtwicklungen 26 auf. Die Drahtwicklungen 26 bestehen aus einem durchgehenden Draht 28, beispielsweise einem Lackdraht mit rundem Querschnitt.

Jede Drahtwicklung 26 ist um einen einzelnen Zahn 22 gewickelt. An den Stirnseiten 18 des Rotors 12 weisen die Drahtwicklungen 26 jeweils einen Wickelkopf 30 auf, der sich über den jeweiligen Zahn 22 von einer Nut 24 zu der anderen Nut 24 erstreckt. In Zwischenbereichen 32 zwischen den Stirnseiten 18 verlaufen die Drahtwicklungen 26 jeweils entlang der Erstreckungsrichtung ER des Rotors 12 innerhalb der Nuten 24. Eine derartige Anordnung der Drahtwicklungen 26 wird auch als konzentrierte Wicklung um die Zähne 22 bezeichnet.

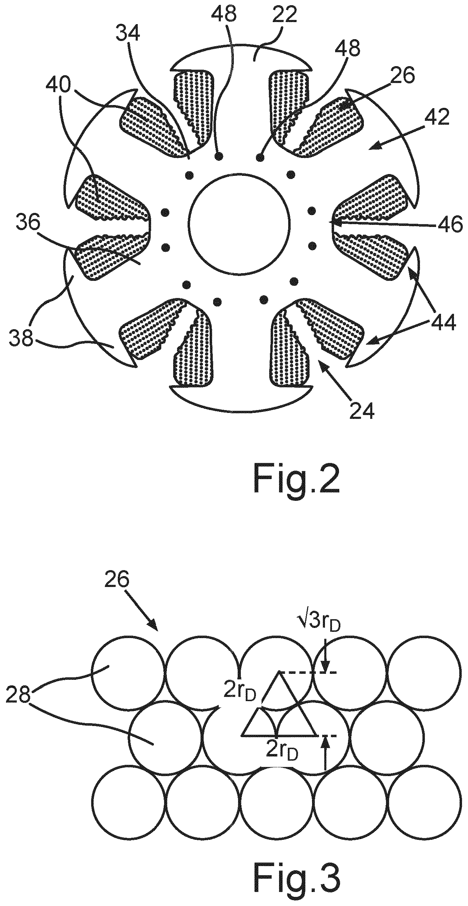

Fig. 2 zeigt einen Schnitt des Rotors 12 in einer Draufsicht.

Die Zähne 22 sind mit einem radial innenliegenden Rotorring 34 des Rotors 12 verbunden. Die Zähne 22 sind jeweils T-förmig mit einem T-Steg 36 und zwei T-Schenkeln 38 ausgebildet. Jede Drahtwicklung 26 ist um einen einzelnen T-Steg 36 gewickelt und bildet eine Spule 40. Die Drahtwicklungen 26 sind außerdem bestrombar ausgebildet. Unter Bestromung bildet sich um die Zähne 22 jeweils ein Magnetpol 42 aus. Daher werden die T-Stege 36 in Verbindung mit den T-Schenkeln 38 auch Polschuh 44 genannt und der Bereich des Rotorrings 34 in einer Nut 24 auch Joch 46 genannt.

Der Rotor 12 weist ferner eine Mehrzahl von Kühlkanälen 48 zum Kühlen des Rotors 12 auf, die durch das Blechpaket 16 entlang der Erstreckungsrichtung ER des Rotors 12 verlaufen. An jedem der Zähne 22 ist wenigstens ein Kühlkanal 48 angeordnet.

Fig. 3 zeigt eine Anordnung des Drahtes 28 in einer der Drahtwicklungen 26. Der Draht 28 in einer Drahtwicklung 26 ist orthozyklisch angeordnet. Dabei wird der Draht 28 in einer Mehrzahl von Lagen angeordnet, wobei der Draht 28 in einer Lage versetzt zu dem Draht 28 der vorigen Lage angeordnet ist.

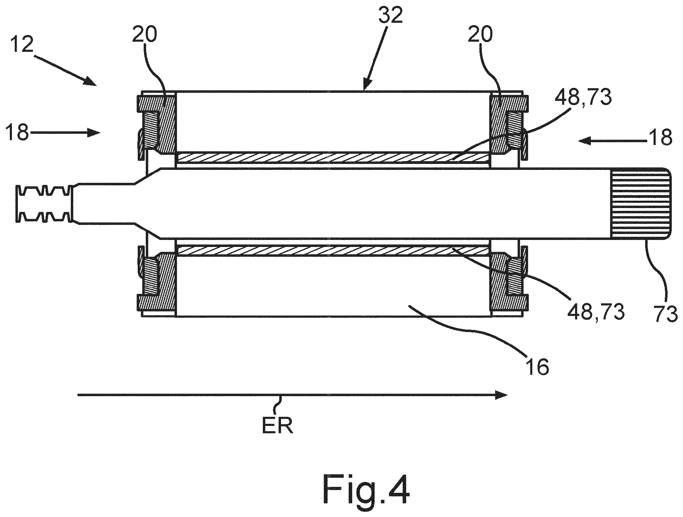

Fig. 4 zeigt einen Schnitt des Rotors 12 in einer Seitenansicht.

Die Kühlkanäle 48 erstrecken sich in den Zwischenbereichen 32. Die Kühlkanäle 48 können auch durch die Sternscheiben 20 verlaufen und an den Stirnseiten 18 austreten.

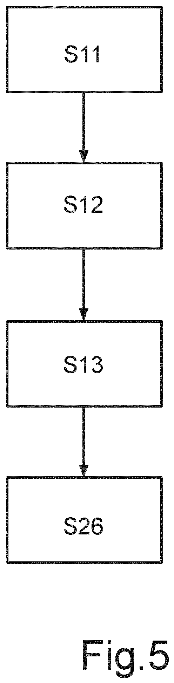

Im Folgenden wird unter Bezugnahme auf Fig. 5 eine Ausführungsform eines Verfahrens zum Imprägnieren der Drahtwicklungen 26 des Rotors 12 beschrieben.

Das Verfahren lässt sich gleichermaßen auf einen Stator 50 für einen Elektromotor und/oder im Allgemeinen auf jedes Bauteil 10 anwenden, das wenigstens eine Drahtwicklung 26 aufweist, die an wenigstens einer Stirnseite 18 von gegenüberliegenden Stirnseiten 18 des Bauteils 10 einen Wickelkopf 30 aufweist und in einem Zwischenbereich 32 zwischen den Stirnseiten 18 entlang einer Erstreckungsrichtung ER des Bauteils 10 verläuft.

Das Verfahren umfasst eine Mehrzahl von Schritten, die im Folgenden beschrieben werden. Einige oder alle der im Folgenden beschriebenen Schritte können nacheinander und/oder in der beschriebenen Reihenfolge durchgeführt werden. Alternativ können einige der im Folgenden beschriebenen Schritte auch parallel zueinander und/oder in einer anderen als der beschriebenen Reihenfolge durchgeführt werden.

Das Verfahren umfasst den Schritt S11:
- Erwärmen, vorzugsweise homogenes Erwärmen, des Rotors 12.

In dem Schritt S11 wird der Rotor 12 mittels Energieeintrag erwärmt oder erhitzt. Das Erwärmen kann durch eine externe Wärmebehandlung in einem Ofen erfolgen. Das Erwärmen kann auch durch eine Bestromung der Drahtwicklungen 26 erfolgen. Das Erwärmen des Rotors 12 erfolgt vorzugsweise derart, dass sich der Rotor 12 homogen oder gleichmäßig erwärmt. Allerdings kann eine ungleichmäßige Erwärmung auch Vorteile bringen.

In einem Schritt S12 umfasst das Verfahren:
- Ausrichten des Rotors 12 derart, dass die Erstreckungsrichtung ER im Wesentlichen vertikal verläuft und der Wickelkopf 30 an der vertikal oberen Stirnseite 18 angeordnet ist.

Der Begriff "im Wesentlichen" umfasst in diesem Kontext eine exakt vertikale Ausrichtung sowie Ausrichtungen, die zum Erzielen einer oder mehrerer technischen Wirkungen des Verfahrens noch tolerierbar sind.

In einem Schritt S13 umfasst das Verfahren:
- Auftragen eines flüssigen und/oder unter Erwärmung zerfließenden, verfestigbaren Imprägniermaterials 52 auf erste Bauteilbereiche 53 an der vertikal oberen Stirnseite 18 zum Überziehen der Wickelköpfe 30 mit dem Imprägniermaterial 52 derart, dass das Imprägniermaterial 52 schwerkraft- und/oder kapillarkraftbedingt von den Wickelköpfen 30 über die Zwischenbereiche 32 in Richtung der vertikal unteren Stirnseite 18 fließt.

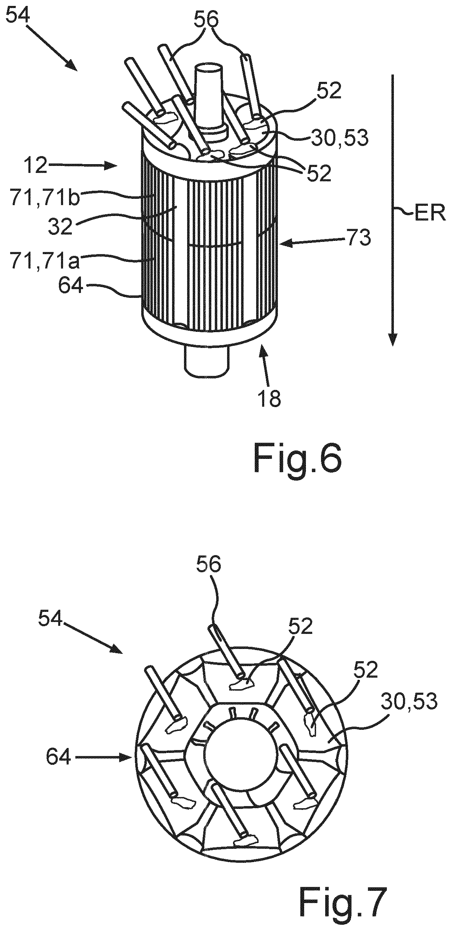

Fig. 6 zeigt eine Anordnung 54 zum Auftragen des Imprägniermaterials 52 und Fig. 7 die Anordnung 54 in einer Draufsicht. Das Auftragen des Imprägniermaterials 52 kann beispielsweise durch eine Mehrzahl von Dosierdüsen 56 erfolgen. Die Anzahl der Dosierdüsen 56 kann der Anzahl der Zähne 22 des Rotors 12 entsprechen. Ein Auslass jeder Dosierdüse 56 ist dabei auf einen ersten Bauteilbereich 53 an der vertikal oberen Stirnseite 18 gerichtet.

Die ersten Bauteilbereiche 53 können die Wickelköpfe 30 selbst sein. Im Allgemeinen sind die ersten Bauteilbereich 53 an der vertikal oberen Stirnseite 18 Bereiche, die sich zum Überziehen der Wickelköpfe 30 mit dem Imprägniermaterial 52 eignen. Beispielsweise können die ersten Bauteilbereiche 53 an der vertikal oberen Stirnseite 18 auch auf speziell ausgebildete Sternscheiben 20 angeordnet sein, von denen aus die Wickelköpfe 30 mit Imprägniermaterial 52 überzogen werden können.

Wenn das Imprägniermaterial 52 auf die ersten Bauteilbereiche 53 aufgetragen ist, wird es durch den Rotor 12 erwärmt. Dadurch kann das Imprägniermaterial 52 zerfließen. Das Imprägniermaterial 52 liegt dann auf den ersten Bauteilbereichen 53 in einem flüssigeren Aggregatzustand als beim Auftragen vor und kann von dort aus die Wickelköpfe 30 überziehen.

Alternativ oder zusätzlich kann das Imprägniermaterial 52 schon in einem flüssigen Aggregatzustand auf die ersten Bauteilbereiche 53 aufgetragen werden. Hierzu kann das Imprägniermaterial 52 beispielsweise schon vor Auftragen erwärmt werden.

Als Imprägniermaterial 52 kann beispielsweise ein Material verwendet werden, dessen Viskosität sich durch Erwärmung verringert. Vorzugsweise wird als Imprägniermaterial 52 ein Imprägnierharz wie z. B. ein Epoxidharz und/oder ein Polyesterharz, insbesondere ein 1K-Polyesterharz oder ein 2K-Polyesterharz, verwendet.

Schwerkraftbedingt und/oder kapillarkraftbedingt fließt das Imprägniermaterial 52 von den Wickelköpfen 30 über die Zwischenbereiche 32 in Richtung der vertikal unteren Stirnseite 18 des Rotors 12 und überzieht dabei die Drahtwicklungen 26.

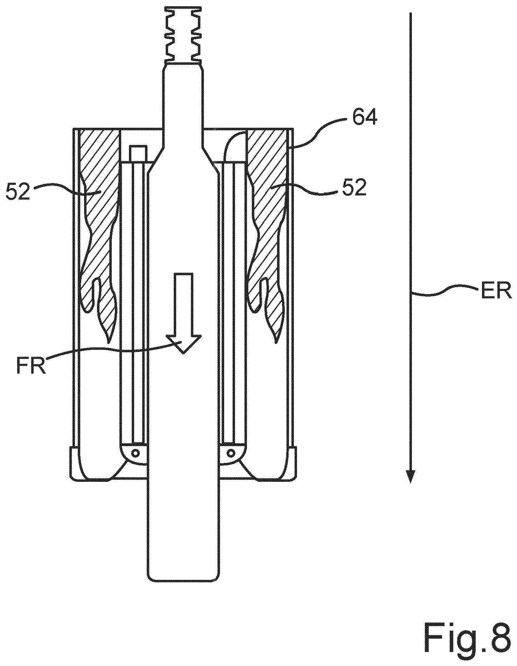

Fig. 8 zeigt hierzu eine Fließrichtung FR des Imprägniermaterials 52, die im Wesentlichen parallel zu der Erstreckungsrichtung ER angeordnet ist.

Die vertikale Ausrichtung des Rotors 12 wird zum Auftragen des Imprägniermaterials 52 und Überziehen der Drahtwicklungen 26 beibehalten.

Zum Auftragen des Imprägniermaterials 52 wird der Rotor 12 vorzugsweise nicht senkrecht zur Erstreckungsrichtung ER bewegt, vorzugsweise nicht um die Erstreckungsrichtung ER rotiert und/oder vorzugsweise nicht derart bewegt bzw. rotiert, dass das schwerkraftbedingte und/oder kapillarkraftbedingte Fließen des Imprägniermaterials 52 von den Wickelköpfen 30 über die Zwischenbereiche 32 in Richtung der vertikal unteren Stirnseite 18 durch Fliehkräfte und/oder Beschleunigungskräfte verringert, umgelenkt und/oder gestört wird.

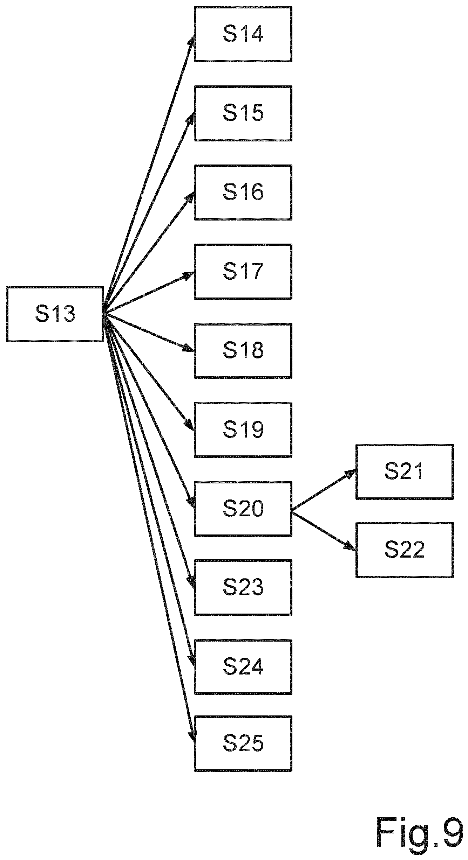

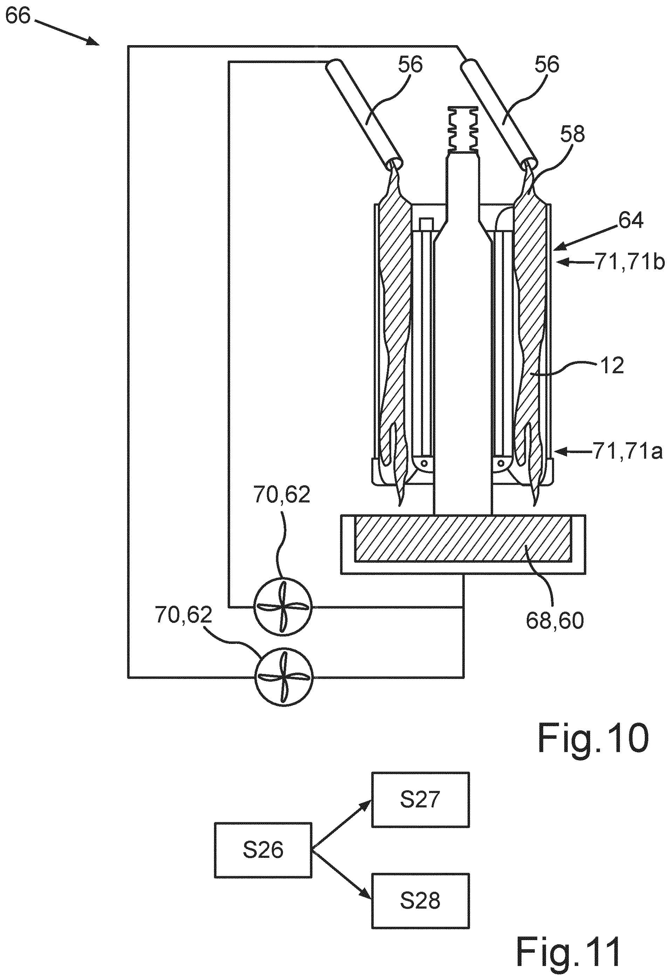

Fig. 9 zeigt weitere Ausführungsformen des Schrittes S13 des Verfahrens. Fig. 10 ist eine zugehörige Illustration hierzu:
In einem Schritt S14 kann das Auftragen des Imprägniermaterials 52 unter Bestromung der Drahtwicklungen 26 erfolgen. Durch den Joule-Effekt entsteht dann aufgrund der Verlustleistung in den Drahtwicklungen 26 Wärme, die sich in dem Rotor 12 verteilt und das Zerfließen des Imprägniermaterials 52 unterstützen kann.

Alternativ oder zusätzlich kann in einem Schritt S15 das Auftragen des Imprägniermaterials 52 unter Vakuum stattfinden. Dadurch können Lufteinschlüsse in den Drahtwicklungen 26 verhindert werden.

Alternativ oder zusätzlich kann in einem Schritt S16 zum Auftragen des Imprägniermaterials 52 an der vertikal oberen Stirnseite 18 des Rotors 12 ein Überdruck und/oder an der vertikal unteren Stirnseite 18 des Rotors 12 ein Unterdruck erzeugt werden.

Ferner kann in einem Schritt S17 eine vorher dosierte Auftragmenge 58 des Imprägniermaterials 52 auf die die ersten Bauteilbereiche 53 aufgetragen werden. Die ausreichende Auftragmenge 58 kann beispielsweise empirisch ermittelt werden.

Alternativ oder zusätzlich kann in einem Schritt S18 das Imprägniermaterial 52 kontinuierlich und/oder in einer überschüssigen Auftragmenge 58 auf die ersten Bauteilbereiche 53 aufgetragen werden, sodass Imprägniermaterial 52 an der vertikal unteren Stirnseite 18 abtropft. Dabei kann ein kontinuierlicher Strom von Imprägniermaterial 52 über die Drahtwicklungen 26 gebildet werden. Hierdurch können Lufteinschlüsse 74 in den Drahtwicklungen 26 ausgespült und/oder verdrängt werden (Verdrängerprinzip).

Alternativ oder zusätzlich kann in einem Schritt S19 die Auftragmenge 58 des Imprägniermaterials 52 und/oder eine Abtropfmenge 60 des Imprägniermaterials 52 erfasst werden.

Alternativ oder zusätzlich kann in einem Schritt S20 ein Imprägnierungsgrad der Imprägnierung der Drahtwicklungen 26 bestimmt werden. Mit anderen Worten kann in dem Schritt S20 überprüft werden, ob die Drahtwicklungen 26 ausreichend, lufteinschlussfrei und/oder homogen mit Imprägniermaterial 52 überzogen sind.

In einem Schritt S21 kann durch Erfassen einer elektrischen Kapazität jeder Drahtwicklung 26 und/oder einer Temperatur des Bauteils 10 der Imprägnierungsgrad bestimmt werden und/oder das Überprüfen erfolgen. Die Kapazität ist proportional zu dem Imprägnierungsgrad in Abhängigkeit der Temperatur des Bauteils 10.

In einem Schritt S22 kann auch durch Vergleich der Auftragmenge 58 und der Abtropfmenge 60 der Imprägnierungsgrad bestimmt werden und/oder das Überprüfen erfolgen. Wenn beispielsweise die Abtropfmenge 60 im Wesentlichen der Auftragmenge 58 entspricht, kann dies darauf hindeuten, dass die Drahtwicklungen 26 ausreichend und/oder homogen mit Imprägniermaterial 52 überzogen sind und die Drahtwicklungen 26 kein weiteres Imprägniermaterial 52 mehr aufnehmen können.

In einem Schritt S23 kann die Auftragmenge 58 auf Grundlage des Imprägnierungsgrads geregelt oder dosiert werden.

Alternativ oder zusätzlich kann in einem Schritt S24 ein Regelungssystem 62 die Auftragmenge 58 derart einstellen, dass sie in etwa der Abtropfmenge 60 entspricht. Unter "in etwa" ist dabei in diesem Kontext zu verstehen, dass die Auftragmenge 58 relativ zu der Abtropfmenge 60 derart eingestellt ist, dass beispielsweise ein Überlaufen des Imprägniermaterials 52 an der vertikal oberen Stirnseite 18 zu außenliegenden Bereichen 64 des Rotors 12 zwischen den Stirnseiten 18 vermieden werden kann.

Das an der vertikal unteren Stirnseite 18 abtropfende Imprägniermaterial 52 kann in einem Schritt S25 zusätzlich aufgefangen und zum erneuten Auftragen auf die ersten Bauteilbereiche 53 desselben oder nächsten Bauteils 10 rückgeführt werden.

Fig. 10 zeigt hierzu ein Beispiel einer Anordnung 66 zum Rückführen des Imprägniermaterials 52. Das abtropfende Imprägniermaterial 52 wird in einem Auffangbecken 68 an der vertikal unteren Stirnseite 18 gesammelt und mit Pumpen 70 wieder zu den Dosierdüsen 56 an der vertikal oberen Stirnseite 18 befördert.

Es wird wieder Bezug auf Fig. 5 genommen:
In einem weiteren Schritt S26 umfasst das Verfahren:
- Verfestigen des Imprägniermaterials 52.

Das Verfestigen des Imprägniermaterials 52 erfolgt mittels Energieeintrag durch Erwärmen oder Erhitzen.

Fig. 11 zeigt Ausführungsformen des Schrittes S26. Der Schritt S26 umfasst die Schritte S27 und S28. Der Schritt S26 kann aber auch nur einen der beiden Schritte S27 und S28 umfassen.

Der Schritt S27 umfasst:
- Gelieren des Imprägniermaterials 52 auf den Drahtwicklungen 26.

Hierzu ist das Imprägniermaterial 52 gelierbar ausgebildet. Als gelierbares Imprägniermaterial 52 eignet sich beispielsweise Imprägnierharz.

Das Gelieren des Imprägniermaterials 52 erfolgt vorzugsweise unter Bestromung der Drahtwicklungen 26. Durch den Joule-Effekt entsteht aufgrund der Verlustleistung in den Drahtwicklungen 26 Wärme, die das Gelieren des Imprägniermaterials 52 ermöglicht oder unterstützt.

Alternativ oder zusätzlich zum Bestromen der Drahtwicklungen 26 und damit inneres Erwärmen kann der Rotor 12 von extern wärmebehandelt werden. Dabei kann der Rotor 12 mittels Konvektionsluft, Infrarotstrahlung und/oder Induktion wärmebehandelt werden. Des Weiteren kann auch das Gelieren des Imprägniermaterials 52 unter Vakuum erfolgen.

Während des Gelierens des Imprägniermaterials 52 in den Drahtwicklungen 26 in einem unteren Bereich kann fortlaufend weiteres Imprägniermaterial 52 auf den jeweiligen Wickelkopf 30 aufgetragen werden. So können die Drahtwicklungen 26 sukzessive mit Imprägniermaterial 52 befüllt und damit imprägniert werden. Es erfolgt somit ein Fluten der Drahtwicklung, ohne dass zunächst eine aufwändige Abdichtung an der Unterseite des Bauteils erfolgen muss.

Das Gelieren kann auch zunächst nur in einem Wicklungsbereich 71 der Drahtwicklungen 26 eingeleitet werden. Das Gelieren des Imprägniermaterials 52 muss somit nicht auf der gesamten Drahtwicklung 26 gleichzeitig eingeleitet werden, sondern kann lokal auf den Wicklungsbereich 71 begrenzt eingeleitet werden.

Beispielsweise kann sich ein erster Wicklungsbereich 71a in einem unteren Bereich des Bauteils 10 befinden. So kann zunächst das Imprägniermaterial 52 in dem ersten Wicklungsbereich 71a geliert und anschließend die Drahtwicklung 26 in Richtung der vertikal oberen Stirnseite 18 weiter mit Imprägniermaterial 52 überzogen und/oder befüllt werden.

Anschließend kann das Gelieren in einem zweiten Wicklungsbereich 71b, der vertikal über dem ersten Wicklungsbereich 71a angeordnet ist, eingeleitet werden.

Der Schritt S28 umfasst:
- Aushärten des Imprägniermaterials 52 auf der wenigstens einen Drahtwicklung.

Das Aushärten des Imprägniermaterials 52 erfolgt vorzugsweise nach dem Gelieren des Imprägniermaterials 52 und unter Wärmbehandlung des Bauteils 10. Das Gelieren des Imprägniermaterials 52 kann unmittelbar vor dem Aushärten des Imprägniermaterials 52 erfolgen oder stufenlos in das Aushärten des Imprägniermaterials 52 übergehen.

Das Aushärten kann durch eine externe Wärmebehandlung in einem Ofen erfolgen. Das Erwärmen des Rotors 12 erfolgt vorzugsweise wieder derart, dass sich der Rotor 12 homogen und gleichmäßig erwärmt.

Indem zunächst das Gelieren in der Anlage zum Einfüllen des Imprägniermaterials erfolgt, kann anschließend das Bauteil in einen anderen örtlichen Bereich transportiert werden, z.B. in den besagten Ofen, wo dann das Aushärten erfolgen kann. Somit kann die Anlage zum Einfüllen des Imprägniermaterials vorzeitig (also vor dem Prozess des Aushärtens) für ein nächstes Bauteil freigemacht werden, was Totzeiten vermeidet.

Das Verfahren umfasst ferner den Schritt (nicht dargestellt):
- Vermeiden eines Auftragens des Imprägniermaterials 52 auf zweite Bauteilbereiche 73, die nicht mit Imprägniermaterial 52 überzogen werden sollen.

Zweite Bauteilbereiche 73 sind Bereiche des Bauteils 10, die nicht mit Imprägniermaterial 52 überzogen werden sollen. Ein Schritt ist daher das Auftragen des Imprägniermaterials 52 zu vermeiden. Zur Vermeidung können die Dosierdüsen 56 der in Fig. 6 und Fig. 7 gezeigten Anordnung 54 geeignet ausgebildet und gezielt ansteuerbar sein.

Vor dem Auftragen des Imprägniermaterials kann das Verfahren ferner den Schritt umfassen (nicht dargestellt):
- Abdichten und/oder Abdecken von zweiten Bauteilbereichen 73.

Um eine Verschmutzung der zweiten Bauteilbereiche 73 weiter zu verringern, können die zweiten Bauteilbereiche 73 vor dem Auftragen zusätzlich abgedichtet und/oder abgedeckt werden. Beispielsweise sollten bei dem Rotor 12 die Kühlkanäle 48 frei von Imprägniermaterial 52 bleiben, damit die Kühlung des Rotors 12 durch die Kühlkanäle 48 nicht beeinträchtigt wird. Wenn die Kühlkanäle 48 an den Stirnseiten 18 des Blechpakets 16 austreten, können diese zweiten Bauteilbereiche 73 abgedichtet und/oder abgedeckt werden. Das Abdichten und/oder Abdecken kann durch die Sternscheibe 20 an der Stirnseite 18 des Blechpakets 16, durch weitere Sternscheiben 20, Verdränger oder sonstige geeignete Mittel erfolgen. Vorzugsweise wird die vertikal obere Stirnseite 18 derart abgedichtet und/oder abgedeckt, dass das Imprägniermaterial 52 von den Wickelköpfen 30 ausschließlich über die Zwischenbereiche 32 in Richtung der vertikal unteren Stirnseite 18 fließen kann.

Alternativ oder zusätzlich kann an der vertikal oberen Stirnseite 18 ein Reservoir 72 zum Fluten der Wickelköpfe 30 mit Imprägniermaterial 52 gebildet werden.

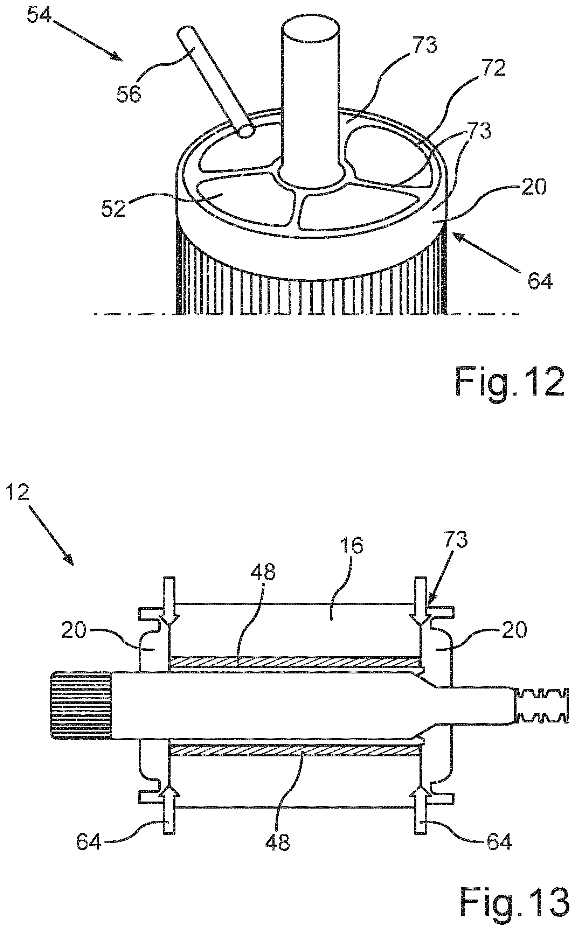

Fig. 12 zeigt hierzu eine weitere Anordnung 54 zum Auftragen des Imprägniermaterials 52. Zum Bilden des Reservoirs 72 können beispielsweise die Sternscheiben 20 an den Stirnseiten 18 des Blechpakets 16 geeignet ausgebildet sein. In diesem Fall kann eine einzige Dosierdüse 56 zum Fluten der Wickelköpfe 30 ausreichen. Das Reservoir 72 wird dann durch die Dosierdüse 56 mit Imprägniermaterial 52 befüllt.

Bei dem Verfahren kann es somit ausreichend sein, die zweiten Bauteilbereiche 73 an der vertikal oberen Stirnseite 18 abzudichten und/oder abzudecken. Andere, beispielsweise die zwischen den Stirnseiten 18 außenliegenden Bereiche 64 des Rotors 12 müssen nicht abgedichtet und/oder abgedeckt werden.

Fig. 13 zeigt einen Schnitt des Rotors 12 in einer weiteren Seitenansicht, wobei die Drahtwicklungen 26 mit einem bekannten Verfahren imprägniert werden. Bei bekannten Verfahren zum Imprägnieren der Drahtwicklungen 26 kann Imprägniermaterial 52 von den außenliegenden Bereichen 64 des Rotors 12 zwischen der Sternscheibe 20 und dem Blechpaket 16 in die Kühlkanäle 48 eindringen.

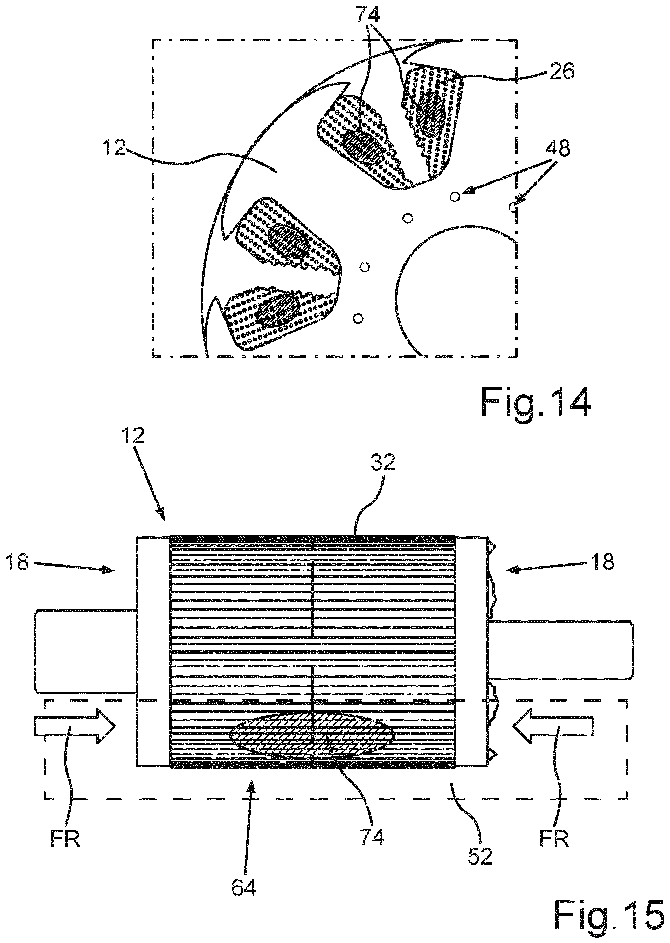

Fig. 14 zeigt einen Schnitt des Rotors 12 von Fig. 13 in einer Draufsicht, wobei der Schnitt mit UV-Licht beleuchtet ist. Unter UV-Licht weisen weiße Bereiche auf Imprägniermaterial 52 hin, während dunkle Bereiche einen Hohlraum oder die Drahtwicklungen 26 anzeigen. Die Aufnahme zeigt Lufteinschlüsse 74 in den Drahtwicklungen 26 und eine inhomogene und/oder unzureichende Verteilung des Imprägniermaterials 52. Außerdem zeigt die Aufnahme, dass mehrere Kühlkanäle 48 mit Imprägniermaterial 52 gefüllt sind.

Fig. 15 zeigt die bei bekannten Verfahren entstehenden Lufteinschlüsse 74. Wie aus Fig. 15 ersichtlich, befinden sich derartige Lufteinschlüsse 74 bei bekannten Verfahren insbesondere in dem Zwischenbereich 32 zwischen den Stirnseiten 18. Die Lufteinschlüsse 74 entstehen unter anderem dadurch, dass bei bekannten Verfahren das Imprägniermaterial 52 von mehreren Seiten des Bauteils 10, hier von den Stirnseiten 18 und den außenliegenden Bereichen 64 des Rotors 12, gleichzeitig aufgetragen wird. Das Imprägniermaterial 52 überzieht somit entlang mehrerer Fließrichtungen FR die Drahtwicklungen 26. Die Luft kann dadurch nicht mehr entweichen und die Lufteinschlüsse 74 entstehen. Die Lufteinschlüsse 74 können des Weiteren bei bekannten Verfahren nicht ausgespült werden.

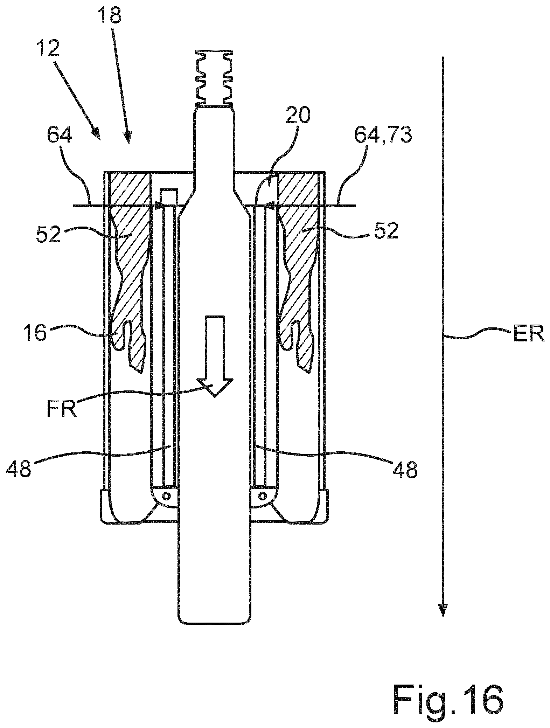

Fig. 16 zeigt einen Schnitt des Rotors 12 in einer weiteren Seitenansicht, wobei die Drahtwicklungen 26 mit dem beschriebenen Verfahren imprägniert werden.

Das beschriebene Verfahren verhindert das Eindringen des Imprägniermaterials 52 von den außenliegenden Bereichen 64 des Rotors 12 zwischen der Sternscheibe 20 an der vertikal oberen Stirnseite 18 und dem Blechpaket 16 in die Kühlkanäle 48. Von den außenliegenden Bereichen 64 kann kein Imprägniermaterial 52 in die Kühlkanäle 48 eindringen, weil die Fließrichtung FR des Imprägniermaterials 52 im Wesentlichen parallel zur Erstreckungsrichtung ER des Rotors 12 verläuft.

Des Weiteren ermöglicht das beschriebene Verfahren, dass die Drahtwicklungen 26 lufteinschlussfrei und/oder homogen mit Imprägniermaterial 52 ausgefüllt sind. Durch die einzige Fließrichtung FR kann Luft zur vertikal unteren Stirnseite 18 entweichen, weshalb das Risiko von Lufteinschlüssen 74 verringert werden kann. Entstandene Lufteinschlüsse 74 können ausgespült werden, weshalb das Auftreten von Lufteinschlüssen 74 weiter reduziert wird. Somit ist bei dem hier beschriebenen Verfahren ein Harzfüllgrad gegenüber bekannten Verfahren deutlich gesteigert.

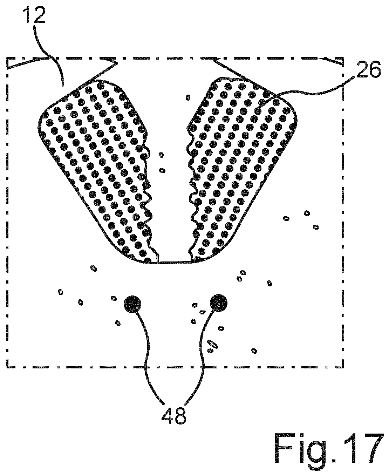

Fig. 17 zeigt einen Schnitt des Rotors 12 von Fig. 16 in einer Draufsicht, wobei der Schnitt mit UV-Licht beleuchtet ist. Die Aufnahme zeigt keinerlei Lufteinschlüsse 74 in den Drahtwicklungen 26 und eine homogene und/oder ausreichende Verteilung des Imprägniermaterials 52. Außerdem sind die Kühlkanäle 48 frei von Imprägniermaterial 52 geblieben.

Die Erfindung schafft demnach auch das Bauteil 10 mit Drahtwicklungen 26, deren Imprägnierung durch das beschriebene Verfahren erhältlich ist. Insbesondere kann das Bauteil 10 als Rotor 12 oder Stator 50 für einen Elektromotor ausgebildet sein. Die Erfindung schafft also auch den Elektromotor, der das Bauteil 10 aufweist.

Ein Prinzip bevorzugter Ausgestaltungen der Erfindung kann somit zusammenfassend wie folgt beschrieben werden:
Eine Idee bevorzugter Ausgestaltungen der Erfindung ist ein Prozess bzw. ein Verfahren, das eine gute Durchdringung der Draht-Wicklungen ermöglicht, aber nicht die Nachteile von bisher bekannten Verfahren mit sich bringt. Der Prozess setzt sich aus einer Abfolge mehrerer Schritte zusammen, wobei die Besonderheiten im Schritt 2 "Imprägnierung eines vertikal stehenden Bauteils" und im Schritt 3 "Gelieren und Fixierung des Harzes am Bauteil" zu finden sind:
- Schritt 1: Homogenes definiertes Vorwärmen des Bauteils
- Schritt 2: Imprägnierung eines vertikal stehenden, nicht bewegten Bauteils
   ∘ Gezielte Dosierung von Material auf die Wickelköpfe der Bauteil-Oberseite; ggf. Fluten der Wickelköpfe (Wanne aus Sternscheiben, Verdrängern, etc.); ggf. gezielter Materialstrom durch Wicklungen
   ∘ Bestromung des Bauteils, um Wärmeverluste zu kompensieren (optional); Konstante Bauteiltemperatur während des gesamten Prozesses
   ∘ Ablauf: vertikale Durchdringung der Wicklung durch Kapillarkräfte und Schwerkraft
- Schritt 3: Gelieren und Fixierung des Harzes am Bauteil mittels Bestromung der Wicklungen (Strom-Wärme-Verfahren); Gelieren kann auch mit anderen Wärmeeintragsverfahren (Induktion, Infrarot, etc.) erfolgen; optional kann durch weitere Befüllung des Bauteils mit Harz (Vorgehen aus Schritt 2) eine verbesserte Befüllung der Wicklungen erreicht werden.
- Optional kann zu einer Steigerung der Wicklungsfüllung mit Harz die Imprägnierung und das Gelieren unter Vakuum durchgeführt werden. Dies bedeutet eine Entgasung/Entlüftung der Wicklung in einer gekapselten Umgebung vor und während des Prozesses.

Nachfolgend erfolgt eine detaillierte Beschreibung der Prozessschritte:
Schritt 1:
   Das Aufheizen des Bauteils erfolgt mittels Energieeintrag durch einen Ofen oder ein anderes Verfahren. Das genaue Heizverfahren ist dabei frei wählbar. Bevorzugt ist eine homogene Wärmeverteilung im Bauteil.
Schritt 2:
   Für die Imprägnierung des vertikal stehenden, nicht bewegten Bauteils gibt es mehrere Ansätze. Diese haben alle gemeinsam, dass Harz auf der Oberseite aufgebracht wird und in der Wicklung nach unten "läuft". Durch die heiße Kupferwicklung wird das Harz zunächst dünnflüssig, sodass die Wicklungen in den Nuten des Bauteils bei ausreichend geringer Harzviskosität vollständig durchtränkt werden. Das "Abfließen" des dünnflüssigen Harzes nach unten stellt zugleich das Imprägnieren/Durchdringen der Wicklungen mit Harz dar. Den Harzfluss stellt Fig. 8 exemplarisch dar.

Das Aufbringen von Harz auf die Wicklungen ist mit einem Dosiersystem und punktgenauer Zuführung (beispielsweise durch Düsen) umgesetzt. Fig. 6 und Fig. 7 zeigen das Aufbringen von Harz mit exemplarisch sechs Dosierdüsen (eine pro Pol).

Als alternatives Vorgehen zur exakten Dosierung zeigt Fig. 12 exemplarisch das Fluten des Wickelkopfes mit einer Dosierdüse. Voraussetzung ist hier das Ermöglichen eines Harz-Reservoirs auf der Oberseite durch das Produkt. Das Produkt muss entsprechend ausgelegt und abgedichtet sein, sodass kein Harz in das Kühlsystem und auf die Außenfläche vordringen kann. Das Harz staut sich im Bereich der Wickelköpfe und kann nur durch die Wicklungen nach unten "abfließen".

Eine Besonderheit ist die Regelung der Dosierung auf die Wickelköpfe in Korrelation zum Produkt. Ein Algorithmus regelt mittels Sensorik den Harzauftrag, indem das zugeführte und auch abtropfende Harz erfasst wird. Die Erfassung kann mittels optischer Sensorik oder auch anderer physikalischer Größen wie Gewicht des Produktes oder des überschüssigen Harzes erfolgen.

Alternativ zu einer direkten Regelung über Messgrößen kann der Prozess auch über eine empirische Ermittlung von Harzauftrag und aufgenommenen Harzmengen in Versuchen befähigt werden.

Eine Möglichkeit ist es, Lufteinschlüsse durch den Volumenstrom des Harzes in den Wicklungen auszuspülen bzw. herauszudrängen. Hierfür ist eine Harzzirkulation im System erforderlich, um das aufgefangene Harz dem Dosiersystem wieder zuzuführen und für eine erneute Imprägnierung der Wicklung zu verwenden (siehe Fig. 10). Eine Beimischung von frischem Harz erfolgt dabei kontinuierlich.

Während des Imprägniervorgangs ist das Bauteil an eine Bestromungseinheit der Imprägnieranlage angeschlossen, sodass mithilfe des Joule-Effektes (also der hier bewusst bewirkten Wicklungsverlustleistung) die Wicklung und das Bauteil erhitzt bzw. durch Nachführen von Wärme auf einer konstanten Temperatur gehalten werden können.

Schritt 3:
Das Gelieren des Harzes erfolgt mithilfe des Storm-Wärme-Verfahrens (Joule-Effektes - also der hier bewusst bewirkten Wicklungsverlustleistung) durch das die Wicklung des Bauteils weiter erhitzt wird. Alternativ oder zusätzlich kann das Gelieren mithilfe eines der vorhergehend beschriebenen Verfahrens zur Wärmebehandlung erfolgen. Ab der harzspezifischen Geliertemperatur steigt die Viskosität des Harzes, sodass das Harz an der Wicklung haften bleibt und nicht mehr aus dieser
herausfließen kann.

Das Gelierzeitfenster kann hierbei mehrere Minuten betragen. Die Viskosität verändert sich nicht schlagartig, sondern in einem kontinuierlichen Prozess. Während dieses Prozesses wird, wie in Schritt 2 beschrieben, weiterhin Harz auf die Wicklungen aufgebracht um diese maximal gut zu verfüllen.

Anschließend wird das Bauteil weiter geliert und ausgehärtet.

Schritt 4:
Das Aushärten des Bauteils erfolgt in einem Ofen. Das genaue Heizverfahren ist dabei frei wählbar. Wichtig ist es, einen externen Wärmeeintrag in das Bauteil zu gewährleisten und die Bauteiltemperatur gemäß Harzspezifikation zu halten.

Bevorzugte Ausgestaltungen der Erfindung haben folgende technische Vorteile:
- Keine Verschmutzung der Außenfläche des Blechpaketes;
- Entlüftung der Wicklung, da der Harzeintrag nur aus einer Richtung erfolgt;
- Keine Verschmutzung des Kühlsystems, folglich wird durch statische vertikale Position des Rotors kein Harz radial zur Welle hin verschleppt; und
- Vereinfachter Imprägnierprozess zu Vergleichsverfahren, folglich Prozesskostenreduktion.

Die Harzschicht darf an kritischen Stellen maximal 0,1 mm dick sein, um unter Berücksichtigung aller Toleranzen keine Kollisionen mit dem Stator zu verursachen. Da der Rotor in kein Harzbad eingebracht werden muss, bildet sich an der Oberfläche des Blechpaketes keine Harzschicht aus. Somit ist auch keine nachträgliche Oberflächenreinigung oder Vermessung des Harzauftrags erforderlich.

Auch eine ausreichende Entlüftung der Wicklung kann durch das Verfahren erreicht werden. Das Harz wird an der Oberseite eingebracht und wandert dann nach unten (siehe Fig. 8). Auf der Unterseite ist die Wicklung noch nicht mit Harz verschlossen, sodass die Luft entweichen kann. Es bildet sich im Gegensatz zum Tauchrollieren daher keine sehr groß ausgeprägte Luftblase aus. Der Harzfüllgrad kann deutlich gesteigert werden.

Die Kühlkanäle verlaufen während des Imprägnierprozesses vertikal im Raum (siehe Fig. 16). Damit entsteht, im Gegensatz zum Tauchrollieren keine durch Gravitation getriebene Harzbewegung zwischen den Sternscheiben und dem Blechpaket (Bereich der oberen zwei Pfeile in Fig. 16). Außerdem wird in diesen Bereichen von extern kein Harz aufgebracht.

Während diese Bereiche in einem Harzbad geflutet werden, bleiben diese für das hier gezeigte Verfahren nahezu vollkommen harzfrei. Ein Volllaufen und Verstopfen der Kühlkanäle mit Harz erfolgen also nicht.

Insgesamt zeigen die Beispiele, wie eine statische Imprägnierung von Drahtwicklungen bereitgestellt werden kann.

### Bezugszeichenliste:

- 10: Bauteil
- 12: Rotor
- 16: Blechpaket
- 18: Stirnseite
- 20: Sternscheibe
- 22: Zahn
- 24: Nut
- 26: Drahtwicklung
- 28: Draht
- 30: Wickelkopf
- 32: Zwischenbereich
- 34: Rotorring
- 36: T-Steg
- 38: T-Schenkel
- 40: Spule
- 42: Magnetpol
- 44: Polschuh
- 46: Joch
- 48: Kühlkanal
- 50: Stator
- 52: Imprägniermaterial
- 53: erster Bauteilbereich
- 54: Anordnung zum Auftragen von Imprägniermaterial
- 56: Dosierdüse
- 58: Auftragmenge
- 60: Abtropfmenge
- 62: Regelungssystem
- 64: außenliegender Bereich
- 66: Anordnung zum Rückführen des Imprägniermaterials
- 68: Auffangbecken
- 70: Pumpe
- 71: Wicklungsbereich
- 71a: erster Wicklungsbereich
- 71b: zweiter Wicklungsbereich
- 72: Reservoir
- 73: zweiter Bauteilbereich
- 74: Lufteinschluss

- ER: Erstreckungsrichtung
- FR: Fließrichtung

## Patentansprüche

1. Verfahren zum Imprägnieren wenigstens einer Drahtwicklung (26) eines Bauteils (10), insbesondere eines Stators (50) oder eines Rotors (12) für einen Elektromotor, wobei die wenigstens eine Drahtwicklung (26) einen Wickelkopf (30) an wenigstens einer Stirnseite (18) von gegenüberliegenden Stirnseiten (18) des Bauteils (10) und einen Zwischenbereich (32), der sich zwischen den Stirnseiten (18) entlang einer Erstreckungsrichtung (ER) des Bauteils (10) erstreckt, aufweist, das Verfahren umfassend die Schritte:
a) Erwärmen, vorzugsweise homogenes Erwärmen, des Bauteils (10);
b) Ausrichten des Bauteils (10) derart, dass die Erstreckungsrichtung (ER) im Wesentlichen vertikal verläuft und der Wickelkopf (30) an der vertikal oberen Stirnseite (18) angeordnet ist;
c) Auftragen eines flüssigen und/oder unter Erwärmung zerfließenden, verfestigbaren Imprägniermaterials (52) auf wenigstens einen ersten Bauteilbereich (53) des Bauteils (10) an der vertikal oberen Stirnseite (18) zum Einleiten des Imprägniermaterials (52) in zumindest einen Bereich des Wickelkopfs (30) derart, dass das Imprägniermaterial (52) schwerkraft- und/oder kapillarkraftbedingt von dem Wickelkopf (30) durch den Zwischenbereich (32) hindurch zu der vertikal unteren Stirnseite (18) fließt; und
d) Verfestigen des Imprägniermaterials (52),
**dadurch gekennzeichnet, dass** Schritt c) umfasst:
c5) Erfassen einer Auftragmenge (58) des Imprägniermaterials (52), das auf den ersten Bauteilbereich (53) aufgetragen wird, und Erfassen einer Abtropfmenge (60) des Imprägniermaterials (52), das an der vertikal unteren Stirnseite (18) des Bauteils (10) abtropft;
c6) Bestimmen eines Imprägnierungsgrads der Imprägnierung der wenigstens einen Drahtwicklung (26) durch Vergleichen von Auftragmenge (58) und Abtropfmenge (60); und
c7) Regeln und/oder Dosieren einer Auftragmenge (58) des Imprägniermaterials (52) auf Grundlage des Imprägnierungsgrads.

2. Verfahren nach Anspruch 1, **dadurch gekennzeichnet, dass** Schritt d) einen, mehrere oder alle der folgenden Schritte umfasst:
d1) Gelieren des Imprägniermaterials (52) in der wenigstens einen Drahtwicklung (26);
d2) Gelieren des Imprägniermaterials (52) durch Wärmebehandlung des Bauteils (10), vorzugsweise mittels Bestromung der wenigstens einen Drahtwicklung, Infrarotstrahlung, Konvektionsluft und/oder Induktion;
d3) Gelieren des Imprägniermaterials (52) zum Unterbinden des Fließens des Imprägniermaterials (52);
d4) Gelieren des Imprägniermaterials (52) zunächst nur in einem unteren Wicklungsbereich (71) der wenigstens einen Drahtwicklung (26) und erzeugen eines Rückstaus des Imprägniermaterials in einem darüber angeordneten Wicklungsbereich;
d5) Sukzessives Gelieren des Imprägniermaterials (52) in einer Mehrzahl von Wicklungsbereichen (71a, 71b).

3. Verfahren nach einem der vorhergehenden Ansprüche, **dadurch gekennzeichnet, dass** Schritt d) einen oder beide der folgenden Schritte umfasst:
d6) Aushärten des Imprägniermaterials (52) in der wenigstens einen Drahtwicklung (26); und
d7) Aushärten des Imprägniermaterials (52) durch Wärmebehandlung des Bauteils (10).

4. Verfahren nach einem der vorhergehenden Ansprüche, **dadurch gekennzeichnet, dass** ein, mehrere oder alle Schritte des Verfahrens unter Bestromung der wenigstens einen Drahtwicklung (26) und/oder unter Vakuum erfolgt bzw. erfolgen.

5. Verfahren nach einem der vorhergehenden Ansprüche, **dadurch gekennzeichnet, dass** Schritt c) einen oder beide der folgenden Schritte umfasst:
c1) Auftragen eines Imprägniermaterials (52), dessen Viskosität sich durch Erwärmung des Imprägniermaterials (52) verringert; und
c2) Auftragen eines Imprägnierharzes (52), vorzugsweise eines Epoxidharzes und/oder eines Polyesterharzes.

6. Verfahren nach einem der vorhergehenden Ansprüche, **dadurch gekennzeichnet, dass** an der vertikal oberen Stirnseite (18) im Vergleich zu der vertikal unteren Stirnseite (18) des Bauteils (10) ein Überdruck und/oder an der vertikal unteren Stirnseite (18) im Vergleich zu der vertikal oberen Stirnseite (18) des Bauteils (10) ein Unterdruck zum Auftragen des Imprägniermaterials (52) erzeugt wird.

7. Verfahren nach einem der vorhergehenden Ansprüche, **dadurch gekennzeichnet, dass** vor dem Auftragen einer, mehrere oder alle der folgenden Schritte durchgeführt werden:
f1) Abdichten und/oder Abdecken wenigstens eines zweiten Bauteilbereichs (73) des Bauteils (10), der nicht mit Imprägniermaterial (52) überzogen werden soll;
f2) Abdichten und/oder Abdecken eines zweiten Bauteilbereichs (73) an der vertikal oberen Stirnseite (18) derart, dass bei Auftragen von Imprägniermaterial (52) auf den wenigstens einen ersten Bauteilbereich (53) das Imprägniermaterial (52) ausschließlich von dem Wickelkopf (30) in die wenigstens eine Drahtwicklung (26), insbesondere den Zwischenbereich (32), in Richtung der vertikal unteren Stirnseite (18) fließt; und
f3) Bilden eines Reservoirs (72) an der vertikal oberen Stirnseite (18) zum Fluten des Wickelkopfs (30) mit Imprägniermaterial (52).

8. Verfahren nach einem der vorhergehenden Ansprüche, **dadurch gekennzeichnet, dass** Schritt c) einen oder beide der folgenden Schritte umfasst:
c3) Auftragen einer dosierten Auftragmenge (58) des Imprägniermaterials (52); und
c4) Ausspülen von Lufteinschlüssen (74) in der wenigstens einen Drahtwicklung (26) durch überschüssiges und/oder kontinuierliches Auftragen von Imprägniermaterial (52).

9. Verfahren nach einem der vorhergehenden Ansprüche, **dadurch gekennzeichnet, dass** Schritt c) ferner umfasst:
c8) Bestimmen des Imprägnierungsgrads durch Erfassen einer elektrischen Kapazität der wenigstens einen Drahtwicklung (26).

10. Verfahren nach einem der vorhergehenden Ansprüche, ferner umfassend die Schritte:
g1) Auffangen von Imprägniermaterial (52), das an der vertikal unteren Stirnseite (18) abtropft; und
g2) Rückführen des aufgefangenen Imprägniermaterials (52) zum erneuten Auftragen auf den Wickelkopf (30).

## Claims

1. Method for impregnating at least one wire winding (26) of a component (10), in particular a stator (50) or a rotor (12) for an electric motor, wherein the at least one wire winding (26) has a winding head (30) at least at one end face (18) of opposing end faces (18) of the component (10) and an intermediate region (32) which extends between the end faces (18) in an extent direction (ER) of the component (10), the method comprising the steps of:
a) heating, preferably homogeneous heating, of the component (10);
b) orientating the component (10) in such a manner that the extent direction (ER) extends substantially vertically and the winding head (30) is arranged on the vertically upper end face (18);
c) applying a liquid impregnation material (52) and/or an impregnation material (52) which is deliquescent with heating and can become solid to at least a first component region (53) of the component (10) at the vertically upper end face (18) in order to introduce the impregnation material (52) in at least one region of the winding head (30) in such a manner that the impregnation material (52) flows as a result of gravitational and/or capillary force from the winding head (30) through the intermediate region (32) to the vertically lower end face (18); and
d) solidifying the impregnation material (52), **characterized in that** the step c) comprises:
c5) detecting an application quantity (58) of the impregnation material (52) which is applied to the first component region (53), and detecting a dripping quantity (60) of the impregnation material (52) which drips onto the vertically lower end face (18) of the component (10);
c6) determining a degree of impregnation of the impregnation of the at least one wire winding (26) by comparing the application quantity (58) and dripping quantity (60); and
c7) controlling and/or metering an application quantity (58) of the impregnation material (52) based on the degree of impregnation.

2. Method according to claim 1, **characterized in that** step d) comprises one or more or all of the following steps:
d1) jelling the impregnation material (52) in the at least one wire winding (26);
d2) jelling the impregnation material (52) by means of thermal treatment of the component (10), preferably by energizing the at least one wire winding, infrared radiation, convection air and/or induction;
d3) jelling the impregnation material (52) in order to prevent the impregnation material (52) from flowing;
d4) jelling the impregnation material (52) initially only in a lower winding region (71) of the at least one wire winding (26) and producing a backlog of the impregnation material in a winding region which is arranged thereabove;
d5) successively jelling the impregnation material (52) in a plurality of winding regions (71a, 71b).

3. Method according to any one of the preceding claims, **characterized in that** step d) comprises one or both of the following steps:
d6) hardening the impregnation material (52) in the at least one wire winding (26); and
d7) hardening the impregnation material (52) by means of thermal treatment of the component (10).

4. Method according to any one of the preceding claims, **characterized in that** one, more or all of the steps of the method is/are carried out with energy being supplied to the at least one wire winding (26) and/or under reduced pressure.

5. Method according to any one of the preceding claims, **characterized in that** step c) comprises one or both of the following steps:
c1) applying an impregnation material (52), the viscosity of which decreases by heating the impregnation material (52); and
c2) applying an impregnation resin (52), preferably an epoxy resin and/or a polyester resin.

6. Method according to any one of the preceding claims, **characterized in that** at the vertically upper end face (18) in comparison with the vertically lower end face (18) of the component (10) an excess pressure and/or at the vertically lower end face (18) in comparison with the vertically upper end face (18) of the component (10) a reduced pressure is produced in order to apply the impregnation material (52).

7. Method according to any one of the preceding claims, **characterized in that**, before the application, one, more or all of the following steps is/are carried out:
f1) sealing and/or covering at least a second component region (73) of the component (10) which is not intended to be covered with impregnation material (52);
f2) sealing and/or covering a second component region (73) at the vertically upper end face (18) in such a manner that, when impregnation material (52) is applied to the at least one first component region (53), the impregnation material (52) flows exclusively from the winding head (30) into the at least one wire winding (26), in particular the intermediate region (32), in the direction of the vertically lower end face (18); and
f3) forming a reservoir (72) at the vertically upper end face (18) in order to flood the winding head (30) with impregnation material (52).

8. Method according to any one of the preceding claims, **characterized in that** step c) comprises one or both of the following steps:
c3) applying a metered application quantity (58) of the impregnation material (52); and
c4) flushing out air inclusions (74) in the at least one wire winding (26) by means of excessive and/or continuous application of impregnation material (52).

9. Method according to any one of the preceding claims, **characterized in that** step c) further comprises:
c8) determining the degree of impregnation by detecting an electrical capacitance of the at least one wire winding (26).

10. Method according to any one of the preceding claims, further comprising the steps of:
g1) collecting impregnation material (52), which drips off at the vertically lower end face (18); and
g2) returning the collected impregnation material (52) for reapplication to the winding head (30).

## Revendications

1. Procédé d'imprégnation d'au moins un enroulement de fil (26) d'un composant (10), en particulier d'un stator (50) ou d'un rotor (12) pour un moteur électrique, dans lequel l'au moins un enroulement de fil (26) présente une tête d'enroulement (30) sur au moins une face frontale (18) parmi les faces frontales opposées (18) du composant (10) et une zone intermédiaire (32) qui s'étend entre les faces frontales (18) le long d'une direction d'extension (ER) du composant (10), le procédé comprenant les étapes consistant à :
a) chauffer, de préférence de manière homogène, le composant (10) ;
b) aligner le composant (10) de sorte que la direction d'extension (ER) s'étend sensiblement verticalement et la tête d'enroulement (30) est disposée sur la face frontale supérieure verticale (18) ;
c) appliquer un matériau d'imprégnation (52) liquide et/ou solidifiable sous l'effet de la chaleur sur au moins une première zone de composant (53) du composant (10) sur la face frontale supérieure verticale (18) pour introduire le matériau d'imprégnation (52) dans au moins une zone de la tête d'enroulement (30) de sorte que le matériau d'imprégnation (52) s'écoule sous l'effet de la gravité et/ou de la force capillaire depuis la tête d'enroulement (30) à travers la zone intermédiaire (32) vers la face frontale verticale inférieure (18) ; et
d) solidifier le matériau d'imprégnation (52), **caractérisé en ce que** l'étape c) consiste à :
c5) détecter une quantité appliquée (58) du matériau d'imprégnation (52) qui est appliqué sur la première zone de composant (53) et détecter une quantité s'écoulant (60) du matériau d'imprégnation (52) qui s'écoule sur la face frontale verticale inférieure (18) du composant (10) ;
c6) déterminer un degré d'imprégnation de l'au moins un enroulement de fil (26) par comparaison de la quantité appliquée (58) et de la quantité s'écoulant (60); et
c7) réguler et/ou doser une quantité appliquée (58) du matériau d'imprégnation (52) sur la base du degré d'imprégnation.

2. Procédé selon la revendication 1, **caractérisé en ce que** l'étape d) comprend une, plusieurs ou toutes les étapes suivantes :
d1) gélifier le matériau d'imprégnation (52) dans au moins un enroulement de fil (26) ;
d2) gélifier le matériau d'imprégnation (52) par traitement thermique du composant (10), de préférence au moyen d'une alimentation dans l'au moins un enroulement de fil, rayonnement infrarouge, air de convection et/ou induction ;
d3) gélifier le matériau d'imprégnation (52) pour empêcher l'écoulement du matériau d'imprégnation (52) ;
d4) gélifier le matériau d'imprégnation (52) d'abord uniquement dans une zone d'enroulement inférieure (71) de l'au moins un enroulement de fil (26) et créer un refoulement du matériau d'imprégnation dans une zone d'enroulement située au-dessus ;
d5) gélifier successivement le matériau d'imprégnation (52) dans une pluralité de zones d'enroulement (71a, 71b).

3. Procédé selon l'une quelconque des revendications précédentes, **caractérisé en ce que** l'étape d) comprend une ou les deux étapes suivantes :
d6) durcissement du matériau d'imprégnation (52) dans au moins un enroulement de fil (26) ; et
d7) durcissement du matériau d'imprégnation (52) par traitement thermique du composant (10).

4. Procédé selon l'une quelconque des revendications précédentes, **caractérisé en ce qu'**une, plusieurs ou toutes les étapes du procédé est ou sont réalisées sous alimentation d'au moins un enroulement de fil (26) et/ou sous vide.

5. Procédé selon l'une quelconque des revendications précédentes, **caractérisé en ce que** l'étape c) comprend une ou les deux étapes suivantes :
c1) application d'un matériau d'imprégnation (52) dont la viscosité diminue sous l'effet de la chaleur du matériau d'imprégnation (52) ; et
c2) application d'une résine d'imprégnation (52), de préférence une résine époxy et/ou une résine polyester.

6. Procédé selon l'une quelconque des revendications précédentes, **caractérisé en ce qu'**une surpression est générée sur la face frontale supérieure verticale (18) par rapport à la face frontale inférieure verticale (18) du composant (10) et/ou sur la face frontale inférieure verticale (18) par rapport à la face frontale supérieure verticale (18) du composant (10) pour appliquer le matériau d'imprégnation (52).

7. Procédé selon l'une quelconque des revendications précédentes, **caractérisé en ce qu'**avant l'application, une, plusieurs ou toutes les étapes suivantes sont réalisées :
f1) étanchéification et/ou recouvrement d'au moins une seconde zone de composant (73) du composant (10) qui ne doit pas être recouverte de matériau d'imprégnation (52) ;
f2) étanchéification et/ou recouvrement d'une seconde zone (73) du composant sur la face frontale supérieure verticale (18) de sorte que, lors de l'application de matériau d'imprégnation (52) sur l'au moins une première zone de composant (53), le matériau d'imprégnation (52) s'écoule exclusivement de la tête d'enroulement (30) dans l'au moins un enroulement de fil (26), en particulier la zone intermédiaire (32), en direction de la face frontale verticale inférieure (18) ; et
f3) formation d'un réservoir (72) sur la face frontale verticale supérieure (18) pour inonder la tête d'enroulement (30) avec du matériau d'imprégnation (52).

8. Procédé selon l'une quelconque des revendications précédentes, **caractérisé en ce que** l'étape c) comprend une ou les deux étapes suivantes :
c3) application d'une quantité dosée (58) du matériau d'imprégnation (52) ; et
c4) rinçage de poches d'air (74) dans au moins un enroulement de fil (26) par application excédentaire et/ou continue de matériau d'imprégnation (52).

9. Procédé selon l'une quelconque des revendications précédentes, **caractérisé en ce que** l'étape c) comprend en outre :
c8) la détermination du degré d'imprégnation par détection d'une capacité électrique de l'au moins un enroulement de fil (26).

10. Procédé selon l'une quelconque des revendications précédentes, comprenant en outre les étapes suivantes :
g1) récupération de matériau d'imprégnation (52) qui s'écoule sur la face frontale inférieure verticale (18) ; et
g2) le renvoi du matériau d'imprégnation récupéré (52) pour une nouvelle application sur la tête d'enroulement (30).
